# EUROPEAN PATENT APPLICATION

(11) **EP 4 311 724 A1**
(43) Date of publication of application: **31.01.2024**
(21) Application number: 22187961.2
(22) Date of filing: 29.07.2022
(51) Int. Cl.: B60P 3/20, B62D 33/04, F25D 23/06, F25D 29/00

(54) **TRANSPORT REFRIGERATION SYSTEM**

(71) Applicant: Carrier Corporation, Palm Beach Gardens, FL 33418 (US)
(72) Inventor: POURCHERESSE, Lionel, 76240 Le Mesnil-Esnard (FR); CHAROULET, Guillaume, 76000 Rouen (FR); CHAKIACHVILI, Bruno, 76160 Saint-Aubin-Épinay (FR); BEAUFRERE, Florain, 76000 Rouen (FR); DUCHER, Gaël, 45160 Olivet (FR)
(74) Representative: Dehns

(57) **Abstract**

A transport refrigeration system (100, 200) is provided comprising a cargo container (120, 220) and a transport refrigeration unit (130, 230) arranged to cool the cargo container (120, 220). The cargo container (120, 220) is equipped with a mobile bulkhead (140, 240) that partitions the interior of the cargo container (120, 220). The transport refrigeration unit (130, 230) comprises a heat-absorbing heat exchanger (160, 260, 262) positioned in fluid communication with the interior of the cargo container (120, 220). The transport refrigeration system (100, 200) is further provided with a sensor (170) configured to determine a distance between the mobile bulkhead (140, 240) and the heat-absorbing heat exchanger (160, 260, 262). A method of operating a transport refrigeration system (100, 200) is also provided.

## Description

The invention relates to a method of operating a transport refrigeration system comprising a mobile bulkhead, and to a transport refrigeration system comprising a mobile bulkhead.

Transport refrigeration systems are used to transport goods that need to be maintained at or close to set environmental conditions, e.g. perishable goods such as food items. Transport refrigeration systems may be equipped with bulkheads to partition a cargo container into several spaces, for example two spaces wherein only one space is environmentally controlled be a transport refrigeration unit. Such bulkheads may be mobile bulkheads i.e. their position within the cargo container may not be fixed, so the volume of the space to be environmentally controlled can be customised to the volume of goods therein.

There is a need for improving operation and e.g. efficiency and safety of a transport refrigeration system comprising a mobile bulkhead.

According to a first aspect of the invention, there is provided a method of operating a transport refrigeration system, comprising: using a sensor to determine a distance between a mobile bulkhead in a cargo container and a heat-absorbing heat exchanger of a transport refrigeration unit arranged to cool the cargo container; and operating the transport refrigeration system based upon the determined distance.

The operation of the transport refrigeration system can therefore be based upon the position of the mobile bulkhead within the cargo container. The method may comprise operating the transport refrigeration unit based upon the determined distance. The mobile bulkhead may be moveable within the cargo container in order to change the size of a temperature-controlled partition within the cargo container, herein referred to as a first compartment. The first compartment may be cooled by the transport refrigeration unit, for example receiving chilled air from the heat-absorbing heat exchanger. The mobile bulkhead may be moveable in a first direction to increase the volume of the first compartment, and may be moveable in second direction (e.g. opposite the first direction) to decrease the volume of the first compartment. The mobile bulkhead may therefore partition the cargo container into adjacent partitions, at least one of which is the first compartment cooled by the transport refrigeration unit. The mobile bulkhead may separate a portion of the cargo container from the heat-absorbing heat exchanger of the transport refrigeration unit e.g. to create a second compartment distinct from the first compartment. The mobile bulkhead may therefore be operable to change the volumes of compartments within the cargo container, and operation of the system may be selected and/or adjusted based on the volume(s) of the compartment(s) within the cargo container e.g. based on the volume of the first compartment. The method may therefore accommodate movement of the mobile bulkhead within the cargo container by selecting and/or adjusting operation of the transport refrigeration system based thereupon.

The mobile bulkhead may be manually moveable (and may be only manually moveable), and therefore its position may be selected or changed by e.g. a driver or a loader without the operation of the transport refrigeration system being updated accordingly. For example, the transport refrigeration unit may remain in a configuration that is unsuitable for use with the mobile bulkhead in the position it is moved to. By using the sensor to determine the distance between the mobile bulkhead and the heat-absorbing heat exchanger, the position of the bulkhead within the cargo container determines how to operate the transport refrigeration system e.g. to thereby improve efficiency and safety.

For example, operating the transport refrigeration system may comprise matching a cooling capacity of the transport refrigeration unit to the size of the first compartment (i.e. to the volume within the cargo container bounded by the mobile bulkhead) so that the cooling capacity of the transport refrigeration unit is not too large or too small for the size of the first compartment. Energy efficiency of the system may therefore be improved. The method may comprise reducing the cooling by the transport refrigeration unit in response to a decrease in the size of the first compartment, and/or may comprise increasing the cooling by the transport refrigeration unit in response to an increase in the size of the first compartment.

Operating the transport refrigeration system may comprise issuing a warning, for example that the size of the first compartment is too large (e.g. to be efficiently cooled) or too small (e.g. to allow sufficient airflow) for the present configuration of the transport refrigeration unit. For example, movement of the mobile bulkhead might increase the volume of the first compartment while the transport refrigeration unit is on a low-cooling setting, so that the larger volume will not be efficiently cooled, or will not reach the desired temperature for the goods stored therein. Movement of the mobile bulkhead may place it too close to the heat-absorbing heat exchanger so that air cannot circulate within the first compartment in a suitable way so that the first compartment is not cooled in the desired way, risking damage to goods as well as to the system.

The warning may be a notification (e.g. on a portable device such as a smartphone, a laptop, a tablet), a display on a user interface (e.g. a panel of the system), an illuminated warning light, an alarm, and so on. Any suitable warning may be used. Operational safety may therefore be improved, and damage or unnecessary wear on the system may be reduced or prevented. Appropriate cooling of the goods in the first compartment may also be ensured.

Operating the transport refrigeration system may comprise shutting-off the transport refrigeration unit. For example, if the determined distance between the mobile bulkhead and the heat-absorbing heat exchanger is too small (e.g. below a predetermined threshold such as a minimum blowing distance) then operation which might damage or unacceptably wear the transport refrigeration unit can be prevented.

The transport refrigeration unit (TRU) may be arranged to condition the cargo container (e.g. the interior of a trailer or the like) and thereby provide temperature control of the first compartment within the cargo container. The transport refrigeration unit may be installed within (or partially within) the cargo container e.g. within or partially within a trailer or other suitable transport cargo volume, and the position of the transport refrigeration unit relative to the cargo container may therefore be fixed. Thus, the position of the heat-absorbing heat exchanger relative to the rest of the cargo container may be fixed. Determining the distance between the mobile bulkhead and the heat-absorbing heat exchanger may therefore comprise measuring the distance between the mobile bulkhead and a part of the cargo container such as fixed wall of the cargo container, since the location of the heat-absorbing heat exchanger within the cargo container may be known.

Any suitable means of determining the distance between the heat-absorbing heat exchanger and the mobile bulkhead may be used. For example, a direct measurement of the space between the two components may be taken, the sensor position on the mobile bulkhead may be used and compared to the position of the heat-absorbing heat exchanger or other component of the cargo container, the position of the mobile head within a rail system designed to support it may be used, and so on. The method may comprise determining the distance between the mobile bulkhead and the heat-absorbing heat exchanger by calculation. Any suitable sensor for determining the distance between the mobile bulkhead and the heat-absorbing heat exchanger may be used. For example, the sensor may be an optical sensor such as a time-of-flight sensor, a lidar sensor, a wireless sensor, a radio sensor, a bluetooth sensor, and/or a radar sensor. In another example, the sensor may be a sonar sensor.

The sensor may be mounted on, or coupled to, the mobile bulkhead, or it may be located elsewhere in the transport refrigeration system as suitable. For example, the sensor may be located at or on the heat-absorbing heat exchanger, on the mobile bulkhead, within a rail upon which the mobile bulkhead is mounted, or any suitable location in the system. The sensor may comprise a plurality of sensor elements which co-operate to provide a determination of the distance between the mobile bulkhead and the heat-absorbing heat exchanger.

The transport refrigeration system may comprise the transport refrigeration unit, the cargo container, the sensor, and the mobile bulkhead. The transport refrigeration system may comprise any suitable vehicle for the cargo container, such as a commercial vehicle (e.g. a light commercial vehicle (LCV)), truck (or rigid truck) and trailer, haulage vehicle, lorry, ship, train, and so on. The cargo container may be an insulated body, a freight container, a portion of a vehicle, a trailer, a box, or any suitable volume for transporting goods in a transport refrigeration system.

The heat-absorbing heat exchanger may be any suitable heat-absorbing heat exchanger for conditioning (e.g. cooling) the first compartment, for example an evaporator. The heat-absorbing heat exchanger may be any suitable heat-absorbing heat exchanger for use in the transport refrigeration unit. The heat-absorbing heat exchanger may or may not evaporate refrigerant during operation e.g. depending on operational parameters and cooling demands. The heat-absorbing heat exchanger may be an evaporator in the narrow sense of the term e.g. a heat exchanger that evaporates a liquid in order to provide cooling.

The mobile bulkhead may be moveable by any suitable means within the cargo container. The mobile bulkhead may be supported on rails, clips, latches, hinges and so on. The mobile bulkhead may be mobile within the cargo container i.e. moveable relative to the rest of the cargo container. The cargo container may comprise the first compartment. The first compartment may be defined by cooperation of the mobile bulkhead with the cargo container.

The determined distance between the mobile bulkhead and the heat-absorbing heat exchanger may be the space between an outlet of the heat-absorbing heat exchanger blowing chilled air and the mobile bulkhead. The sensor may therefore be used to check if a minimum blowing distance of the heat-absorbing heat exchanger is provided, and hence if operation of the transport refrigeration unit is safe and efficient.

The method may comprise reading the present system configuration (e.g. the present cooling demand and/or desired temperature), and operating the system based on the reading (e.g. increasing or decreasing the cooling demand and/or desired temperature). For example, operating the transport refrigeration system may be different depending on the present configuration of the system.

The method may comprise regularly using the sensor to determine the distance, for example the method may comprise determining the distance every minute, every hour, and/or every day. The method may comprise using the sensor to determine the distance upon satisfaction of a predetermined condition e.g. upon start-up of the system, or upon a change in the system such as a change in cooling capacity of the transport refrigeration unit, a change in cooling demand, a change in the set temperature, or upon movement of the mobile bulkhead within the cargo container, and so on.

The method may comprise comparing the determined distance between the mobile bulkhead and the heat-absorbing heat exchanger to a predetermined minimum blowing distance, and shutting down and/or preventing operation of the transport refrigeration unit if the determined distance is less than the minimum blowing distance.

The method may comprise determining the minimum blowing distance of the heat-absorbing heat exchanger. The method may comprise storing the predetermined minimum blower distance e.g. within a memory of the transport refrigeration system. The method may comprise retrieving the stored minimum blower distance to compare with the determined distance between the mobile bulkhead and the heat-absorbing heat exchanger.

Whether the transport refrigeration unit is shut down or simply prevented from operating may depend on whether it is running when the comparison is made. The method may comprise shutting down operation of the transport refrigeration unit if the transport refrigeration unit is running when the comparison is made. The method may comprise preventing operation of the transport refrigeration if it is not running when the comparison is made.

The method may comprise comparing the determined distance to the predetermined minimum blowing distance upon - or prior to - start-up of the transport refrigeration unit, and may thereby comprise checking that the minimum blowing distance is provided before start-up. That is, the method may comprise starting the transport refrigeration unit only if the minimum blowing distance is provided.

The method may therefore comprise not operating the transport refrigeration unit if the mobile bulkhead is too close to the heat-absorbing heat exchanger e.g. so that the risk of damage or wear to the transport refrigeration unit is reduced, and the risk of insufficient cooling for stored goods is reduced. The method may therefore protect the heat-absorbing heat exchanger and/or stored goods, and/or ensure efficient operation of the transport refrigeration unit by ensuring that the minimum blowing distance is provided.

The method may comprise calculating a volume of a first compartment of the cargo container based upon the determined distance between the mobile bulkhead and the heat-absorbing heat exchanger, and matching a cooling capacity of the transport refrigeration unit to the calculated volume of the first compartment.

The method may comprise calculating the volume based upon the height and width of the first compartment. The height and width of the first compartment may be fixed i.e. may not be adjustable. Movement of the mobile bulkhead may change the depth of the first compartment. By calculating the volume of the first compartment, the transport refrigeration unit can be operated in a suitable configuration e.g. with suitable cooling power. The method may comprise operating the transport refrigeration unit at a higher cooling capacity for a larger volume of the first compartment, and operating the transport refrigeration unit at a lower cooling capacity for a smaller volume of the first compartment.

The method may therefore comprise tailoring the cooling capacity of the transport refrigeration unit to the volume created by the mobile bulkhead i.e. the volume of the first compartment. The method may comprise selecting a cooling capacity suitable for cooling (e.g. efficiently cooling) the calculated volume, and operating the transport refrigeration unit at the selected cooling capacity.

Matching the cooling capacity of the transport refrigeration unit to the calculated cargo volume may comprise turning off (and/or turning on) one or more of a plurality of compressors of the transport refrigeration unit to achieve a desired cooling capacity. The method may therefore comprise selecting a subset of compressors of the transport refrigeration unit to operate based upon the position of the mobile bulkhead. For example, if the mobile bulkhead is closer to the heat-absorbing heat exchanger, fewer compressors may be used, and if the mobile bulkhead is further from the heat-absorbing heat exchanger more compressors may be used. The method may comprise operating the transport refrigeration unit with more compressors for a larger volume of the first compartment, and operating the transport refrigeration unit with fewer compressors for a smaller volume of the first compartment.

Matching the cooling capacity of the transport refrigeration unit to the calculated volume may comprise adjusting the speed of a fan of the transport refrigeration unit. The method may comprise increasing the speed of the fan e.g. to increase cooling. The method may comprise decreasing the speed of the fan e.g. to decrease cooling. The method may comprise operating the fan at a higher speed for a larger volume of the first compartment, and operating the fan at a lower speed for a smaller volume of the first compartment.

The method may comprise cycling operation of the transport refrigeration unit to control its cooling of the first compartment. The method may comprise adjusting the duration of the cycle to control the cooling provided by the transport refrigeration unit.

The method may comprise calculating a volume of a first compartment based upon the determined distance between the mobile bulkhead and the heat-absorbing heat exchanger, and determining if the transport refrigeration unit is capable of conditioning the calculated volume.

The method may comprise determining if the transport refrigeration unit is capable of conditioning the calculated volume whilst maintaining a predetermined efficiency. The method may comprise adjusting operation of the transport refrigeration system if it is determined that the transport refrigeration unit is not capable of conditioning the calculated volume. For example, the method may comprise increasing and/or decreasing the cooling of the transport refrigeration unit in response to determining that it is not capable of conditioning the calculated volume for a predetermined efficiency.

The method may comprise checking that the transport refrigeration unit is suitable for efficiently conditioning the space it is associated with. Since the mobile bulkhead may be manually movable (e.g. by a driver) it is possible that it is moved to an unsuitable location, thereby creating a volume that is e.g. too large for the heat-absorbing heat exchanger to reliably or efficiently cool, or too small to allow sufficient airflow, for a predetermined efficiency.

The method may comprise outputting a warning, indicator or alarm if it is determined that the transport refrigeration unit is not capable of conditioning the calculated cargo volume e.g. for a predetermined efficiency.

The method may comprise determining if the transport refrigeration unit is capable of conditioning the calculated volume using the present configuration. The method may comprise checking if the present configuration is appropriate for the volume of the first compartment. The method may comprise adjusting operation of the transport refrigeration unit based upon that check. For example, the method may determine that the present configuration provides sufficient cooling. The method may comprise determing that the present configuration does not provide sufficient cooling, in which case the method may further comprise increasing cooling by the transport refrigeration unit. The method may comprise determing that the present configuration provides too much cooling, in which case the method may further comprise decreasing cooling by the transport refrigeration unit.

The method may comprise comparing the determined distance between the mobile bulkhead and the heat-absorbing heat exchanger to a predetermined threshold, and outputting a warning indicator if the determined distance is less than the predetermined threshold.

The predetermined threshold may be selected based on suitable requirements, and may for example be the minimum blowing distance. Thus, the method may comprise outputting a warning if the minimum blowing distance is not provided. The method may comprise determining and/or storing the predetermined threshold e.g. in a memory of the system. The method may comprise recalling the predetermined threshold in order to compare with the determined distance.

The predetermined threshold may also be e.g. larger than the predetermined minimum blowing distance. For example, the predetermined threshold may be a distance at which operation of the transport refrigeration unit is possible with a low risk of damage, but at which efficiency may be reduced. The warning in that instance could therefore simply be a warning that the system is not optimally configured. Any suitable predetermined threshold may be used, depending on the desired output.

The method may comprise comparing the determined distance between the mobile bulkhead and the heat-absorbing heat exchanger to a predetermined threshold, and outputting a warning indicator if the determined distance is greater than the predetermined threshold. In this case, the warning could indicate for example that the mobile bulkhead is too far away and the present configuration of the transport refrigeration unit is not sufficient to properly cool the resulting volume of the first compartment. Alternatively, the predetermined threshold may represent a maximum distance at which the mobile bulkhead might be, so that if the if the threshold is exceeded it indicates that the mobile bulkhead is placed incorrectly, or perhaps in an open status etc.

The method might comprise outputting the warning based on the present system configuration e.g. on the present settings of the transport refrigeration unit such as cooling capacity, ambient temperature, external temperature, expected journey time, desired temperature, and so on.

The method may comprise detecting a status of the mobile bulkhead, and operating the transport refrigeration system based upon the detected status.

The status may be the configuration of the mobile bulkhead e.g. an open configuration and/or a closed configuration. The mobile bulkhead may be moved to open the first compartment e.g. in order to access goods store therein. Operation of the transport refrigeration system may therefore be based upon the status of the mobile bulkhead. For example, a warning could be issued if the bulkhead is open or not correctly closed. The method may include selecting a cooling capacity of the transport refrigeration unit based upon the status of the bulkhead.

The method may include outputting an indicator if the mobile bulkhead is in an open configuration. The method may include outputting an indicator if the mobile bulkhead is in a closed configuration.

The mobile bulkhead may comprise a plurality of partial bulkheads, each of which may be openable and closable independently. For example, the mobile bulkhead may comprise two half-bulkheads that can be moved independently and must both be aligned for the bulkhead to be in a closed position. Thus, the partial bulkheads may cooperate to partition space within the cargo container and thereby define the first compartment. The method may include determining the status of each of a plurality of partial bulkheads, and may comprise operating the system based on the status of each of the partial bulkheads.

The method may comprise determining the distance between each partial bulkhead and the heat-absorbing heat exchanger, and may comprise operating the system based upon the determined distances. For example, the method may comprise issuing a warning if the distances do not match and e.g. indicate that the bulkhead is not correctly closed because the partial bulkheads are different distances from the heat-absorbing heat exchanger.

The method may comprise calculating a cargo volume based upon the determined distance between the mobile bulkhead and the heat-absorbing heat exchanger, and associating the calculated volume with products therein and storing the association and calculated cargo volume.

The method may comprise storing a record of the calculated cargo volume in a memory, or any suitable storage medium. Multiple records may be stored to document repeated usage of the transport refrigeration system, for example to track the usage of the transport refrigeration system by a single user.

The method may comprise operating the transport refrigeration system based on the stored record of the cargo volume. For example, the method may comprise matching the cooling capacity of the transport refrigeration unit to a last stored record of the calculated cargo volume.

In the case that there are multiple stored records of the cargo volume, the method may comprise operating the transport refrigeration system based on an average of the stored records, a weighted average of the stored records, or a model derived from the stored records.

The method may comprise storing additional information in the memory, such as information of different users of the transport refrigeration system, of routes taken by the transport refrigeration system (for example, based on GPS data), or any other information related to the use of the transport refrigeration system.

The method may comprise using information stored in the memory, including one or more records of the cargo volume, to predict future usage of the transport refrigeration system. For example, the method may comprise predicting future energy consumption of the transport refrigeration system based on the one or more stored records of the cargo volume. The method may comprise mapping customer usage and/or predicting energy consumption. The method may comprise obtaining statistics on cargo volume usage and recommending product selection based upon those statistics (e.g. recommending cargo container size, refrigeration system).

The method may include using a plurality of sensors to determine the distance between the mobile bulkhead and the heat-absorbing heat exchanger. For example, each sensor of the plurality of sensors may be configured to determine the distance to a predetermined one of a plurality of points on the mobile bulkhead.

The method may include comparing the determined distances from the plurality of sensors to each other to determine if the mobile bulkhead is in an open or closed position. For example, if all of the determined distances between each of the plurality of sensors and their respective points on the mobile bulkhead are the same, the transport refrigeration system may determine that the mobile bulkhead is in the closed position. If one or more of the determined distances is not the same as the other determined distances, the transport refrigeration system may determine that the mobile bulkhead is in the open position.

The method may comprise using a plurality of sensors to determine the distance between a plurality of partial bulkheads and the heat-absorbing heat exchanger. For example, there may be two sensors, and the method may include using each of the two sensors to determine the distance between a different one of two half-bulkheads and the heat-absorbing heat exchanger.

The method may include comparing the determined distances between each half-bulkhead and the heat-absorbing heat exchanger to determine if the half-bulkheads are cooperating to partition the cargo container, for example if the determined distances are the same the transport refrigeration system may determine that the half-bulkheads are cooperating appropriately.

The method may include operating a second heat-absorbing heat exchanger based on the determined distance. The second heat-absorbing heat exchanger may be positioned such that it is in fluid communication with the second compartment when the cargo container is partitioned by the mobile bulkhead. The second heat-absorbing heat exchanger may not be in fluid communication with the first compartment when when the cargo container is partitioned by the mobile bulkhead, and the first heat-absorbing heat exchanger may not be in fluid communication with the second compartment when the cargo container is partitioned by the mobile bulkhead. That is, the first heat-absorbing heat exchanger and the second heat-absorbing heat exchanger may be arranged to condition the respective compartments. The method may comprise operating the first heat-absorbing heat exchanger at a first cooling capacity to condition the first compartment and operating the second heat-absorbing heat exchanger at a second cooling capacity to condition the second compartment. The first cooling capacity may be different from the second cooling capacity. For example, if the volume of the first compartment is determined to be greater than the volume of the second compartment, the method may comprise operating the first heat-absorbing heat exchanger at a greater cooling capacity than the second heat-absorbing heat exchanger, to achieve the same amount of cooling in both the first compartment and second compartment. In another example, the method may comprise operating the first heat-absorbing heat exchanger at a greater cooling capacity than the second heat-absorbing heat exchanger, to achieve a greater amount of cooling in the first compartment than in the second compartment.

The method may comprise performing the method steps as recited herein for a second mobile bulkhead. Each of the first mobile bulkhead and the second mobile bulkhead may have an associated sensor and an associated heat-absorbing heat exchanger. The method may comprise determining the volume of the first compartment from the distance between the first mobile bulkhead and the first heat-absorbing heat exchanger and determining the volume of the second compartment from the distance between the second mobile bulkhead and the second heat-absorbing heat exchanger. The method may comprise operating the first heat-absorbing heat exchanger at a first cooling capacity based on the determined volume of the first compartment and operating the second heat-absorbing heat exchanger at a second cooling capacity based on the determined volume of the second compartment.

According to a second aspect of the invention, there is provided a transport refrigeration system comprising a cargo container, a transport refrigeration unit arranged to condition the cargo container, a mobile bulkhead for partitioning space within the cargo container, and a sensor, wherein the sensor is operable to determine a distance between the mobile bulkhead and a heat-absorbing heat exchanger of the transport refrigeration unit, and the transport refrigeration system is configured to operate based upon the determined distance.

A transport refrigeration system may comprise a vehicle with a cargo container (such as a trailer) and a transport refrigeration unit arranged to cool the cargo container. The cargo container may comprise an insulated body and is equipped with a mobile bulkhead that may be positioned to partition the cargo container into a number of partitions e.g. a first compartment and another partition (e.g. a non-temperature-controlled compartment). The mobile bulkhead may divide the cargo container into compartments by extending across the width and height of the cargo container.

The vehicle included in the transport refrigeration system may be a truck, a lorry, or some other vehicle appropriate for transporting cargo. The vehicle may have a power unit such as an internal combustion engine, an electric engine, or another suitable means of generating power. The cargo container may be integrally connected to the vehicle e.g. as a trailer, or may be removably attached to the vehicle, e.g. by a hitch, tow-bar, or other suitable means. The power unit may supply power to the transport refrigeration unit.

The mobile bulkhead may be formed from a single rigid body. Alternatively, the mobile bulkhead may be a series of rigid bodies joined together such that the mobile bulkhead is flexible in one or more directions.

The mobile bulkhead may be mounted on rails along which the mobile bulkhead can be moved to different positions along the length of the cargo container, or other such means may be provided to facilitate movement of the mobile bulkhead. This positioning of the mobile bulkhead can be performed manually. By changing the position of the mobile bulkhead within the cargo container, the volumes of the compartments (e.g. the first compartment) created by the mobile bulkhead can be altered as needed based on, for example, the volume of goods to be transported. If the mobile bulkhead is positioned manually, the operation of the transport refrigeration system may not be updated to account for the change to the compartment volumes. The movement of the mobile bulkhead may be confined to a limited range, and/or the mobile bulkhead may be removable from the cargo container.

The transport refrigeration system is also equipped with a transport refrigeration unit comprising at least one heat-absorbing heat exchanger, positioned in fluid communication with the interior of the cargo container, and particularly with the first compartment. The transport refrigeration unit may further comprise at least one compressor, a heat-rejection heat exchanger, and an expansion device. The position of the heat-absorbing heat exchanger may be fixed relative to the cargo container. The heat-absorbing heat exchanger may be operable to cool air in a compartment of the cargo container, herein referred to as the first compartment, and blow the cooled air into the first compartment to cool goods therein from a heat-absorbing heat exchanger outlet.

The system is further provided with at least one sensor configured to determine a distance between the mobile bulkhead and the at least one heat-absorbing heat exchanger. The distance between the mobile bulkhead and the heat-absorbing heat exchanger may be the distance between the mobile bulkhead and the heat-absorbing heat exchanger outlet. Any suitable sensor for determining the distance between the mobile bulkhead and the heat-absorbing heat exchanger may be used. For example, the sensor may be an optical sensor such as a time-of-flight sensor, a lidar sensor, or a radar sensor, or the sensor may be a sonar sensor. The sensor may alternatively be means to determine the position of the mobile bulkhead along the length of the rail system, if provided.

The sensor may be affixed to the mobile bulkhead, or the sensor may be affixed to the heat-absorbing heat exchanger. Alternatively, the sensor may be affixed to a wall of the cargo container. The sensor may be located wherever suitable within the system.

The sensor may determine the distance between the mobile bulkhead and another element of the system e.g. a wall of the cargo container. The transport refrigeration unit may be fixed relative to the other element, and therefore the distance between the heat-absorbing heat exchanger and the mobile bulkhead may consequently be determined. The sensor may also directly measure the distance between the mobile bulkhead and the heat-absorbing heat exchanger of the transport refrigeration unit.

The operation of the transport refrigeration system is based on the determined distance between the heat-absorbing heat exchanger and the mobile bulkhead. For example, if the position of the heat-absorbing heat exchanger relative to the cargo container is fixed and known, the determined distance between the heat-absorbing heat exchanger and the mobile bulkhead may be used to calculate the volume of the first compartment.

The cooling capacity of the transport refrigeration unit may be adjusted to more efficiently cool the volume of the first compartment. The cooling capacity of the transport refrigeration unit may be selected based upon the calculated volume of the first compartment. This may involve changing the operation of the transport refrigeration unit, for example it may involve changing (e.g. increasing and/or decreasing) the speed of a fan for blowing air over the heat-absorbing heat exchanger. Changing operation of the transport refrigeration unit may comprise turning off the fan for a predetermined amount of time. Changing operation of the transport refrigeration unit may comprise changing operation of the number of compressors thereof e.g. running the transport refrigeration unit using only a subset of the number of compressors e.g. two of four. Selecting the cooling capacity may include selecting which of a plurality of compressors of the transport refrigeration unit to operate.

The determined distance between the mobile bulkhead and the heat-absorbing heat exchanger may be compared to a predetermined threshold. There may be a number of predetermined thresholds, e.g., a first predetermined threshold indicative of a maximum acceptable distance between the mobile bulkhead and the heat-absorbing heat exchanger, and/or a second predetermined threshold indicative of a minimum acceptable distance between the mobile bulkhead and the heat-absorbing heat exchanger e.g. a minimum blowing distance.

The mobile bulkhead may be positioned such that the volume of the first compartment is too large to be cooled by the heat-absorbing heat exchanger, e.g., the mobile bulkhead may be positioned such that the determined distance between the mobile bulkhead and the heat-absorbing heat exchanger is greater than the first predetermined threshold. In such instances, an alarm may be triggered to indicate that the heat-absorbing heat exchanger does not have sufficient cooling capacity to efficiently cool the first compartment. The alarm may be triggered if the transport refrigeration unit does not have the cooling capacity to cool the first compartment, and/or if the transport refrigeration unit does not have the cooling capacity to cool the first compartment while maintaining a predetermined level of efficiency. The alarm may be triggered if the cooling is insufficient merely for the present settings of the transport refrigeration unit e.g. if the cooling needs to be increased.

The transport refrigeration system may shut-off the transport refrigeration unit in response to a sensing that the volume of the first compartment is too great to be cooled for a predetermined efficiency, or if the volume of the first compartment is too great to cool without damaging the transport refrigeration unit.

The transport refrigeration system may be configured to trigger an alarm if the determined distance between the mobile bulkhead and the heat-absorbing heat exchanger is greater than the first predetermined threshold, but less than a third predetermined threshold, and to shut-off the transport refrigeration unit if the determined distance is greater than the third predetermined distance. For example, the transport refrigeration system may trigger an alarm if the calculated volume is too great to be cooled for a predetermined efficiency, but the transport refrigeration unit is not at risk of damage, and the transport refrigeration system may shut-off the transport refrigeration unit if attempting to cool the first compartment could damage the transport refrigeration unit.

In other instances, the mobile bulkhead may be positioned too close to the heat-absorbing heat exchanger e.g., too close to the heat-absorbing heat exchanger outlet. The determined distance between the mobile bulkhead and the heat-absorbing heat exchanger may be less than the second predetermined distance. Transport refrigeration units typically have a "minimum blower distance" that should be respected i.e. an unobstructed space, extending from the transport refrigeration unit, into which the transport refrigeration unit blows cool air. The minimum blowing distance is provided to avoid damage to the transport refrigeration unit, but also to ensure suitable airflow and cooling for goods cooled thereby. In the event that the mobile bulkhead is positioned too closely to the heat-absorbing heat exchanger, the transport refrigeration system may prevent the heat-absorbing heat exchanger from activating, and/or may trigger the heat-absorbing heat exchanger to shut off. Alternatively, or additionally, the sensor may trigger a warning to indicate that the mobile bulkhead is positioned too closely to the heat-absorbing heat exchanger. The warning could be a visual or audible indicator, or any suitable notification.

The transport refrigeration system may be configured to trigger a warning if the determined distance between the mobile bulkhead and the heat-absorbing heat exchanger is less than the second predetermined threshold, but greater than a fourth predetermined threshold, and to shut-off the heat-absorbing heat exchanger if the determined distance is less than the fourth predetermined distance. For example, the transport refrigeration system may issue a warning if the mobile bulkhead is closer than a first minimum blowing distance, and the transport refrigeration system may shut-off the transport refrigeration unit if the mobile bulkhead is closer than a second minimum blowing distance, wherein the second minimum blowing distance is shorter than the first minimum blowing distance. The first minimum blowing distance may be the distance at which the transport refrigeration unit cannot operate at a predetermined efficiency, and the second minimum blowing distance may be the distance at which the transport refrigeration unit is at risk of damage.

Shutting off the heat-absorbing heat exchanger when the mobile bulkhead is too close to the heat-absorbing heat exchanger may protect the heat-absorbing heat exchanger from damage or unnecessary wear. For example, if the mobile bulkhead is too close to the heat-absorbing heat exchanger outlet, pressure may be increased at a heat-absorbing heat exchanger fan, or parts of the heat-absorbing heat exchanger may freeze e.g. heat exchanger coils within the heat-absorbing heat exchanger may freeze. Thus, not providing the minimum blower distance for the transport refrigeration unit can lead to premature wear and degradation of the transport refrigeration unit. Positioning the mobile bulkhead too close to the heat-absorbing heat exchanger may also limit the circulation of cooled air from the heat-absorbing heat exchanger within the first compartment, reducing the effectiveness of the transport refrigeration unit at cooling goods in the first compartment. The effectiveness of the transport refrigeration unit may also be reduced if the mobile bulkhead is positioned too far from the heat-absorbing heat exchanger, resulting in the volume of the first compartment being greater than the transport refrigeration unit has the capacity to cool at a predetermined efficiency, or too large to cool to a desired temperature.

The transport refrigeration system may also be configured to calculate a volume for goods within the first compartment based on the determined distance between the mobile bulkhead and the heat-absorbing heat exchanger. The transport refrigeration system may determine if the transport refrigeration unit is capable of conditioning the calculated cargo volume at a predetermined efficiency, or if it is capable of cooling the volume to a predetermined temperature for storing goods. The transport refrigeration system may then select an appropriate cooling capacity for the transport refrigeration unit based on the calculated volume for goods and operate the transport refrigeration unit at that capacity, or trigger an alarm to indicate that the cargo cannot be efficiently conditioned, or the predetermined temperature cannot be reached.

Operating the transport refrigeration unit at an appropriate cooling capacity may include selectively controlling the operational state of one or more compressors of the transport refrigeration unit to be on or off. Operating the transport refrigeration unit at an appropriate cooling capacity may include selectively controlling a fan of the transport refrigeration unit, such as a condenser fan or a heat-absorbing heat exchanger fan, to be on or off; and/or adjusting the speed of a fan of the transport refrigeration unit. For example, the speed of a heat-absorbing heat exchanger fan may be increased to increase the cooling capacity of the heat-absorbing heat exchanger, or the speed of a heat-absorbing heat exchanger fan may be decreased to decrease the cooling capacity of the heat-absorbing heat exchanger.

The transport refrigeration system may comprise a memory or other suitable storage medium configured to store a record of the calculated volume of goods. The memory may be configured to store other information, such as information of a minimum blowing distance, a predetermined threshold, and a predetermined efficiency.

The mobile bulkhead may be capable of being moved to an open position, i.e., a position that does not result the mobile bulkhead partitioning the cargo container into multiple compartments. A closed position of the mobile bulkhead may then be defined as a position that results in the mobile bulkhead partitioning the cargo container into multiple compartments. The open position may be a fully open position. The fully open position may be one wherein the mobile bulkhead is positioned to be generally flush against a wall of the cargo container, or wherein the mobile bulkhead is fully wrapped around a spool. The open position may also be a partially open position, wherein the mobile bulkhead is positioned anywhere between the fully open position and the closed position.

The mobile bulkhead may be moved between the open and closed positions manually, and/or by (or with the aid of) other means such as hydraulic or pneumatic means. The movement may be a lever motion, a rolling motion, or any other motion appropriate to the configuration of the mobile bulkhead.

In addition to determining the distance between the mobile bulkhead and the heat-absorbing heat exchanger, the sensor may be configured to detect a status of the mobile bulkhead, e.g., to determine if the bulkhead is in an open or closed position. The sensor may be configured to determine the distance between a plurality of predetermined points of the mobile bulkhead and the heat-absorbing heat exchanger, and/or between a plurality of predetermined points of the mobile bulkhead and one or more predetermined locations of the cargo container. For example, the sensor may be configured to determine the distance between each corner of the mobile bulkhead and a corresponding corner of a cargo container wall. The transport refrigeration system may include a plurality of sensors, each configured to determine the distance between a predetermined one of a plurality of points of the mobile bulkhead and the heat-absorbing heat exchanger.

The operation of the transport refrigeration system may be based on the detected status of the mobile bulkhead. The transport refrigeration system may select the cooling capacity of the transport refrigeration unit based on the determined open or closed position of the mobile bulkhead. Alternatively, or additionally, the determination that the mobile bulkhead is in an open or closed position may trigger a warning, such as a visual or audible indicator. For example, if the mobile bulkhead is detected to be in the open position, the transport refrigeration system may issue a warning to notify the operator of the transport refrigeration system that the mobile bulkhead needs to be moved to a closed position, and/or the transport refrigeration system may prevent the transport refrigeration unit from operating to prevent inefficient usage that could damage the transport refrigeration unit.

The mobile bulkhead may also comprise a plurality of partial bulkheads, for example, two half-bulkheads, that can be moved independently and must all be aligned for the bulkhead to be in a closed position. Thus, the partial bulkheads may cooperate to partition space within the cargo container.

The sensor may be configured to determine the distance between each partial bulkhead of a mobile bulkhead and the heat-absorbing heat exchanger. The transport refrigeration system may be equipped with a plurality of sensors, each configured to determine the distance between one of a plurality of partial bulkheads and an heat-absorbing heat exchanger. For example, the transport refrigeration system may compare the readings the plurality of sensors to determine if all of the plurality of partial bulkheads are aligned, and issue a warning that the mobile bulkhead is in an open position if at least one of the partial bulkheads is determined to out of alignment.

The transport refrigeration system may be equipped with a transport refrigeration unit having two heat-absorbing heat exchangers in fluid communication with the interior of the cargo container. The first heat-absorbing heat exchanger may be positioned at one end of the cargo container and a second heat-absorbing heat exchanger may be positioned at the opposite end of the cargo container, such that when the cargo container is divided by the mobile bulkhead, the first heat-absorbing heat exchanger is located in the first compartment and the second heat-absorbing heat exchanger is located in the second compartment. Each of the first heat-absorbing heat exchanger and the second heat-absorbing heat exchanger may operate at a cooling capacity independent of the other heat-absorbing heat exchanger, according to the requirements of the goods to be transported in the first compartment and the second compartment, respectively. Both heat-absorbing heat exchangers may have an associated sensor or sensors that determine the distance between the respective heat-absorbing heat exchangers and the mobile bulkhead, or there may only be a sensor to determine the distance between one heat-absorbing heat exchanger and the mobile bulkhead.

Alternatively, at least one of the first heat-absorbing heat exchanger and/or the second heat-absorbing heat exchanger may be positioned remotely from the first compartment and/or the second compartment, respectively. The at least one remote heat-absorbing heat exchanger may be in fluid communication with its respective compartment by means of air ducting, or other suitable means.

The cargo container may comprise a plurality of mobile bulkheads, such that the cargo container may be partitioned into three or more compartments. For example, there may be a first compartment that is refrigerated by means of the heat-absorbing heat exchanger, a second compartment that is not refrigerated, and a third compartment that is also not refrigerated. Alternatively, the first compartment and the second compartment may be refrigerated by the first heat-absorbing heat exchanger and a second heat-absorbing heat exchanger, respectively, and the third compartment may be non-refrigerated.

Any suitable arrangement of heat-absorbing heat exchangers and compartments may be provided, for example each compartment having a respective heat-absorbing heat exchanger. The operation of each heat-absorbing heat exchanger may be based upon the position(s) of the mobile bulkhead(s) defining its respective compartment.

The transport refrigeration system may be configured to calculate the volume of the first compartment by using the sensor associated with the first heat-absorbing heat exchanger and calculating the volume of the second compartment by using a sensor associated with the second heat-absorbing heat exchanger. Alternatively, when the cargo container is only fitted with one mobile bulkhead, the volume of the first compartment may be calculated by only using the sensor associated with the first heat-absorbing heat exchanger, and the volume of the second compartment may be determined as the difference between the total volume of the cargo container and the volume of the first compartment. That is, the second compartment may complement the first compartment to provide the cargo container. The transport refrigeration system may operate the transport refrigeration unit such that the first heat-absorbing heat exchanger and second heat-absorbing heat exchanger have different cooling capacities based on the volumes of the first compartment and the second compartment. For example, the cooling capacity of the first heat-absorbing heat exchanger may be greater than the cooling capacity of the second heat-absorbing heat exchanger if the first compartment has a greater volume than the second compartment, and vice versa.

The transport refrigeration system may be configured to shut-off the second heat-absorbing heat exchanger if the sensor determines that the mobile bulkhead is in an open position, such that the entire interior of the cargo container is cooled only by the first heat-absorbing heat exchanger. If the bulkhead is open so that the volume in the cargo container is contiguous, the system may co-ordinate operation of the first heat-absorbing heat exchanger and second heat-absorbing heat exchanger. Alternatively, the system may be configured to operate the first heat-absorbing heat exchanger and second heat-absorbing heat exchanger together if the bulkhead is open.

In another embodiment, the first heat-absorbing heat exchanger may be positioned at one end of the cargo container, and the second heat-absorbing heat exchanger may be positioned part way along the length of the cargo container. The first heat-absorbing heat exchanger may have a maximum cooling capacity such that it can only effectively cool a limited volume of the cargo container. If the mobile bulkhead is moved away from the first heat-absorbing heat exchanger past a predetermined distance, the volume of the first compartment may exceed the volume that the first heat-absorbing heat exchanger can cool sufficiently. By positioning the second heat-absorbing heat exchanger at the predetermined distance, the second heat-absorbing heat exchanger may act as a backup to cool the first compartment. If the sensor determines that the distance between the first heat-absorbing heat exchanger and the mobile bulkhead is greater than the predetermined distance, the transport refrigeration unit may activate the second heat-absorbing heat exchanger to provide additional cooling to the first compartment.

The method as recited herein with reference to the first aspect of the invention may be performed using the system as recited herein with reference to the second aspect of the invention. The method may therefore comprise providing and/or using any of the features described herein with reference to the second aspect of the invention.

The system may be configured to perform the method as recited herein with reference to the first aspect of the invention. The system may therefore be configured to carry out any of the method steps recited in respect thereof.

According to another aspect of the invention, there is provided a method of operating a transport refrigeration system comprising determining the position of a mobile bulkhead within a cargo container, and operating the transport refrigeration system based upon the determined position of the mobile bulkhead. The method may include any of the features described herein with reference to the first aspect of the invention, and/or may comprise providing and/or using any of the features described herein with reference to the second aspect of the invention.

Certain embodiments of the invention are described below by way of example only and with reference to the accompanying drawings in which:
Figure 1 shows a transport refrigeration system having a mobile bulkhead; and
Figure 2 shows a transport refrigeration system having a transport refrigeration unit with more than one evaporator unit.

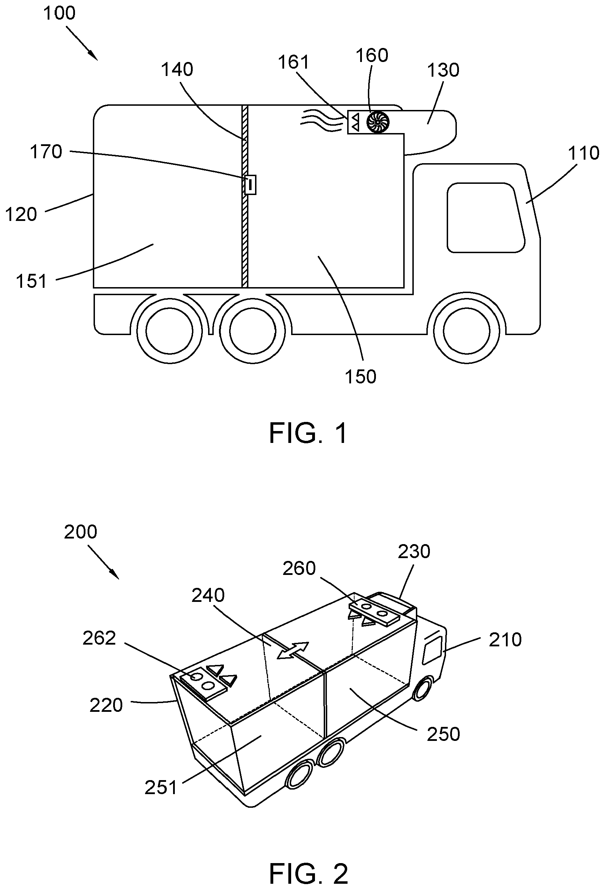

As shown in Figure 1, a transport refrigeration system 100 includes a vehicle 110 with a cargo container in the form of an insulated body 120 and a transport refrigeration unit 130 arranged to cool the insulated body 120. The insulated body 120 is equipped with a mobile bulkhead 140 that partitions the interior of the insulated body 120 into a first compartment 150 and a second compartment 151. The transport refrigeration unit 130 comprises a heat-absorbing heat exchanger in the form of an evaporator 160 positioned in fluid communication with the interior of the insulated body 120. The evaporator 160 cools air in the first compartment 150 and blows the cooled air into the first compartment 150 to cool goods therein from an evaporator outlet 161.

The mobile bulkhead 140 can be moved to different positions along the length of the insulated body 120, changing the volumes of the first compartment 150 and the second compartment 151.

The transport refrigeration system 100 is further provided with a sensor 170 configured to determine a distance between the mobile bulkhead 140 and the evaporator 160, e.g., the distance between the mobile bulkhead 140 and the evaporator outlet 161.

The operation of the transport refrigeration system 100 is based on the determined distance between the mobile bulkhead 140 and the evaporator 160. For example, if the transport refrigeration system 100 determines that the mobile bulkhead 140 is closer to the evaporator 160 than a minimum blowing distance at start-up of the transport refrigeration unit 130, the transport refrigeration system 100 may prevent the transport refrigeration unit 130 from operating and/or the transport refrigeration system 100 may issue an alarm to alert an operator of the transport refrigeration system 100. If the mobile bulkhead 140 is determined to be moved closer to the evaporator 160 than the minimum blowing distance while the transport refrigeration unit 130 is active, the transport refrigeration system 100 may shut off the transport refrigeration unit 130 an/or the transport refrigeration system 100 may issue an alarm.

The volume of the first compartment 150 is calculated using the determined distance between the mobile bulkhead 140 and the evaporator 160. The calculated volume of the first compartment 150 is used to estimate a volume for goods stored therein. The cooling capacity of the transport refrigeration unit 130 is configured to efficiently cool the goods in the first compartment 150 according to the estimated volume of goods and the cooling requirements, for example by changing the number of operative compressors thereof. For example, the transport refrigeration system 100 may increase the cooling capacity of the transport refrigeration unit 130 if the calculated volume of the first compartment 150 increases, to maintain a predetermined target level of cooling. The transport refrigration unit 130 may change its operation based on movement of mobile bulkhead 140.

Figure 2 shows a transport refrigeration system 200 including a vehicle 210 with a cargo container in the form of an insulated body 220 and a transport refrigeration unit 230 arranged to cool the insulated body 220. The insulated body 220 is equipped with a mobile bulkhead 240 that partitions the interior of the insulated body 220 into a first compartment 250 and a second compartment 251. The transport refrigeration unit 230 comprises two heat-absorbing heat exchangers in the form of a first evaporator 260 and a second evaporator 262. The first evaporator 260 is positioned to provide cooling to the first compartment 250 and the second evaporator 262 is positioned to provide cooling to the second compartment 251.

In addition to calculating the volume of the first compartment 250 from the determined distance between the mobile bulkhead 240 and the first evaporator 260, the transport refrigeration system 200 can derive (e.g. calculate) the volume of the second compartment 251 as the difference between the total interior volume of the insulated body 220 and the volume of the first compartment 250. The system comprises a sensor (e.g. sensor 170 on the mobile bulkhead 240) operable to determine a distance between the mobile bulkhead 240 and one of the heat-absorbing heat exchangers 260, 262.

The cooling capacity of the transport refrigeration unit 230 is configured to efficiently cool goods in both the first compartment 250 and second compartment 251. The goods in each compartment may have different cooling requirements e.g. the goods in the first compartment 250 may need to be transported at a lower temperature than the goods in the second compartment 251. The cooling capacities of the first evaporator 260 and second evaporator 262 are configured as needed for the first compartment 250 and second compartment 251, respectively, for example by changing the speed of a fan blowing air over each evaporator 260, 262. For example, the first compartment 250 may need to be cooled to a lower temperature than the second compartment 251. The cooling capacity of the first evaporator 260 and second evaporator 262 may be configured to achieve the required temperatures, accounting for the calculated volumes of the first compartment 250 and second compartment 251. In another instance, the calculated volume of the first compartment 250 may be larger than that of the second compartment 251, and the cooling capacity of the first evaporator 260 may be configured to be sufficiently greater than the cooling capacity of the second evaporator 262 to achieve the same temperature in both the first compartment 250 and second compartment 251.

Advantageously, the method and system described herein provide for improved operation of transport refrigeration systems. Embodiments of the present invention may allow for the distance between a mobile bulkhead and an evaporator to be compared to a minimum blowing distance of the evaporator. Positioning a mobile bulkhead too close to an evaporator outlet may impinge a flow of cooling air from an evaporator. This impingement could lead to poor circulation of cooling air within a compartment, reducing the efficiency of a transport refrigeration unit configured to cool goods in said compartment, or may lead to excessive stress on evaporator components, potentially resulting in reduced evaporator efficiency or damage to evaporator components. By determining the distance between the mobile bulkhead and the evaporator, the present invention may alert an operator of a transport refrigeration system to the above issues, or alter the operation of the transport refrigeration unit, resulting in improved system efficiency and a reduction in the risk of damage or spoiled goods. The system can also determine the volume of a compartment to be cooled by the transport refrigeration unit and set a cooling capacity to improve the efficiency of the transport refrigeration unit.

## Claims

1. A method of operating a transport refrigeration system (100; 200), comprising:
using a sensor (170) to determine a distance between a mobile bulkhead (140; 240) in a cargo container (120; 220) and a heat-absorbing heat exchanger (160; 260, 262) of a transport refrigeration unit (130; 230) arranged to cool the cargo container; and
operating the transport refrigeration system based upon the determined distance.

2. The method as claimed in claim 1, comprising
comparing the determined distance between the mobile bulkhead (140; 240) and the heat-absorbing heat exchanger (160; 260, 262) to a predetermined minimum blowing distance, and
shutting down and/or preventing operation of the transport refrigeration unit (130; 230) if the determined distance is less than the minimum blowing distance.

3. The method as claimed in claim 1 or 2, comprising
calculating a volume of a first compartment (150; 250) of the cargo container (120; 220) based upon the determined distance between the mobile bulkhead (140; 240) and the heat-absorbing heat exchanger (160; 260, 262), and
matching a cooling capacity of the transport refrigeration unit (130; 230) to the calculated volume of the first compartment.

4. The method as claimed in any preceding claim, comprising
calculating a volume of a first compartment (150; 250) based upon the determined distance between the mobile bulkhead (140; 240) and the heat-absorbing heat exchanger (160; 260, 262), and
determining if the transport refrigeration unit (130; 230) is capable of conditioning the calculated volume.

5. The method as claimed in any preceding claim, comprising
comparing the determined distance between the mobile bulkhead (140; 240) and the heat-absorbing heat exchanger (160; 260, 262) to a predetermined threshold, and
outputting a warning indicator if the determined distance is less than the predetermined threshold.

6. The method as claimed in any preceding claim, comprising
detecting a status of the mobile bulkhead (140; 240), and
operating the transport refrigeration system (100; 200) based upon the detected status.

7. The method as claimed in any preceding claim, comprising
calculating a cargo volume based upon the determined distance between the mobile bulkhead (140; 240) and the heat-absorbing heat exchanger (160; 260, 262), and
associating the calculated volume with products therein and storing the association and calculated cargo volume.

8. A transport refrigeration system (100; 200) comprising a cargo container (120; 220), a transport refrigeration unit (130; 230) arranged to condition the cargo container, a mobile bulkhead (140; 240) for partitioning space within the cargo container, and a sensor (170), wherein the sensor is operable to determine a distance between the mobile bulkhead and a heat-absorbing heat exchanger (160; 260, 262) of the transport refrigeration unit, and the transport refrigeration system is configured to operate based upon the determined distance.

9. The transport refrigeration system of claim 8, wherein the system (100; 200) is configured to compare the determined distance between the mobile bulkhead (140; 240) and the heat-absorbing heat exchanger (160; 260, 262) to a predetermined minimum blowing distance, and shut down and/or prevent operation of the transport refrigeration unit (130; 230) if the determined distance is less than the minimum blowing distance.

10. The transport refrigeration system of claim 8 or 9, wherein the system (100; 200) is configured to calculate a volume of a first compartment (150; 250) based upon the determined distance between the mobile bulkhead (140; 240) and the heat-absorbing heat exchanger (160; 260, 262), and match a cooling capacity of the transport refrigeration unit (130; 230) to the calculated volume.

11. The transport refrigeration system of claim 8, 9 or 10, wherein the system (100; 200) is configured to calculate a volume of a first compartment (150; 250) based upon the determined distance between the mobile bulkhead (140; 240) and the heat-absorbing heat exchanger (160; 260, 262), and determine if the transport refrigeration unit (130; 230) is capable of conditioning the calculated volume.

12. The transport refrigeration system of any of claims 8 to11, wherein the system (100; 200) is configured to compare the determined distance between the mobile bulkhead (140; 240) and the heat-absorbing heat exchanger (160; 260, 262) to a predetermined threshold, and output a warning indicator if the determined distance is less than the predetermined threshold.

13. The transport refrigeration system of any of claims 8 to 12, wherein the system (100; 200) is configured to detect a status of the mobile bulkhead (140; 240), and operate the transport refrigeration system based upon the detected status.

14. The transport refrigeration system of any of claims 8 to 12, wherein the system (100; 200) is configured to perform the method of any of claims 1 to 7.
